# EUROPÄISCHE PATENTSCHRIFT

(11) **EP 1 483 550 B1**
(45) Veröffentlichungstag und Bekanntmachung des Hinweises auf die Patenterteilung: **16.02.2011**
(21) Anmeldenummer: 03750399.2
(22) Anmeldetag: 13.03.2003
(51) Int. Cl.: G01D 3/02, G01R 15/20

(54) **TRANSMITTER**
TRANSMITTER
TRANSMETTEUR

(30) Priorität: 14.03.2002 DE 10211771
(43) Veröffentlichungstag der Anmeldung: 08.12.2004
(73) Patentinhaber: Endress + Hauser GmbH + Co. KG, 79689 Maulburg (DE)
(72) Erfinder: ROSSKOPF, Bernd, 79688 Hausen (DE); BROCK, Hans-Jörg, 79639 Grenzach-Wyhlen (DE)
(74) Vertreter: Andres, Angelika Maria
(86) Internationale Anmeldenummer: PCT/EP2003/002630
(87) Internationale Veröffentlichungsnummer: WO 2004/001340

(56) Entgegenhaltungen:
- DE-A- 4 410 180
- DE-A- 19 905 071
- US-A- 4 783 659
- US-A- 5 481 200

## Beschreibung

Die Erfindung betrifft einen Transmitter.

Bei in der Meß- und Regeltechnik üblichen Anwendungen, z.B. bei der Kontrolle, Steuerung und/oder Automatisierung komplexer Prozesse, sind üblicherweise eine Vielzahl von Transmittern, z.B. Druck-, Temperatur-, Durchfluß- und/oder Füllstandstransmitter, im Einsatz.

Ein Transmitter besteht in der Regel aus einem Meßaufnehmer, der eine physikalische Meßgröße erfaßt und in eine elektrische Größe umwandelt, und einer Elektronik, die die elektrische Größe in ein Meßsignal umwandelt.

Solche Transmitter weisen sehr häufig einen Stromausgang auf, d.h. der Transmitter regelt einen über ein Leitungspaar zu- und abgeführten Strom in Abhängigkeit von einem momentanen Meßwert der physikalischen Größe. Das Meßsignal ist bei diesen Transmittern ein Signalstrom. Gemäß einem in der Meß- und Regeltechnik üblichen Standard wird der Signalstrom in Abhängigkeit von dem momentanen Meßwert auf Werte zwischen einem minimalen Signalstrom von 4 mA und einem maximalen Signalstrom von 20 mA eingestellt.

Die Meßsignale werden üblicherweise von einer übergeordneten Einheit, z.B. einer Steuer- und/oder Regeleinheit, erfaßt. Die übergeordnete Einheit liefert in Abhängigkeit von den momentanen Meßwerten Anzeige-, Steuer- und/oder Regelsignale für die Kontrolle, Steuerung und/oder Automatisierung eines Prozesses. Beispiele hierfür sind speicherprogrammierbare Steuerungen (SPS), Prozeßleitsysteme (PLS) oder Personalcomputer (PC).

Bei herkömmlichen Transmittern (siehe z.B. DE 19905071 A) ist in das Leitungspaar des Stromausgangs ein ohmscher Meßwiderstand eingefügt. Eine über diesen Widerstand abfallende Spannung ist proportional zum momentanen Signalstrom und kann somit im Transmitter zur Regelung des Signalstromes herangezogen werden.

Obwohl der Einsatz eines solchen Meßwiderstands sehr weit verbreitet ist, bringt er einige Nachteile mit sich.

Sehr häufig erfolgt über das Leitungspaar nicht nur die Signalübertragung sondern auch die Versorgung des Transmitters. Für den Transmitter steht bei einer begrenzten Speisespannung, z.B. 12 V, und einem durch den aktuellen Meßwert vorgegebenen Signalstrom, z.B. zwischen 4 mA und 20 mA, nur eine begrenzte Leistung zur Verfügung. Diese geringe Leistung wird durch eine durch den Widerstand verbrauchte Verlustleistung zusätzlich reduziert. Es steht damit dem Transmitter weniger Leistung zur Verfügung.

Die Verlustleistung wird am Widerstand in Wärme umgewandelt. Diese Wärme ist aber insb. beim Betrieb in explosionsgefährdeten Bereichen unerwünscht.

Damit eine hohe Meßgenauigkeit erzielt werden kann, muß der Widerstandswert des Meßwiderstands entsprechend groß sein. Je größer der Widerstandswert ist, umso mehr Leistung geht jedoch am Meßwiderstand verloren und umso mehr Wärme wird gebildet.

Ein weiterer Nachteil besteht darin, daß Widerstandswerte von Widerständen temperaturabhängig sind. Diese Temperaturabhängigkeit kann zu zusätzlichen Meßfehlern führen.

Es ist eine Aufgabe der Erfindung, einen Transmitter mit einem verbesserten Stromausgang anzugeben.

Hierzu besteht die Erfindung in einem Transmitter mit
- einem Meßaufnehmer,
   - der dazu dient eine physikalische Meßgröße zu erfassen und in eine elektrische Größe umzuwandeln,
- einer Elektronik,
   - die die elektrische Größe in ein Meßsignal umwandelt und
   - über einen Stromausgang in Form eines der Meßgröße entsprechenden Signalstromes zur Verfügung stellt, und
- einer Aufnahmeeinheit,
   - mit einem magnetoresistiven Element,
   - dessen Widerstandswert sich in Abhängigkeit von dem durch den Signalstrom erzeugten magnetischen Fluß ändert,
bei dem eine Regelschaltung zur Einstellung des Signalstromes in Abhängigkeit vom Meßsignal vorgesehen ist, und bei dem der Regelschaltung zur Regelung des meßgrößenabhängigen Signalstromes der mittels der Aufnahmeeinheit erfaßte momentante Signalstrom zugeführt ist.

Gemäß einer weiteren Ausgestaltung weist die Regelschaltung einen Transistor auf, der im Betrieb durch ein von der Elektronik generiertes meßwert-abhängiges Steuersignal angesteuert ist.

Gemäß einer Weiterbildung ist die Aufnahmeeinheit galvanisch vom Stromausgang getrennt.

Gemäß einer Ausgestaltung ist ein Regelverhalten der Regelschaltung durch eine oder mehrer Stellgrößen einstellbar.

Gemäß einer weiteren Ausgestaltung sind die Stellgrößen in einem Speicher abgelegt und digital einstellbar.

Gemäß einer Weiterbildung ist die Regelschaltung als ein integrierter Schaltkreis ausgebildet, oder die Regelschaltung und die Aufnahmeeinheit sind als ein integrierter Schaltkreis ausgebildet.

Gemäß einer Ausgestaltung enthält der integrierte Schaltkreis auch einen Schaltungsteil, der aus dem Signalstrom eine Versorgungsspannung für den Transmitter oder Teile davon generiert.

Die Erfindung und weitere Vorteile werden nun anhand der Figuren der Zeichnung, in denen zwei Ausführungsbeispiele eines Transmitters dargestellt sind, näher erläutert; gleiche Elemente sind in den Figuren mit denselben Bezugszeichen versehen.
- Fig. 1: zeigt ein Blockschaltild eines erfindungsgemäßen Transmitters;
- Fig. 2: zeigt eine Abwandlung der in Fig. 1 dargestellten Regelschaltung für den Signalstrom.

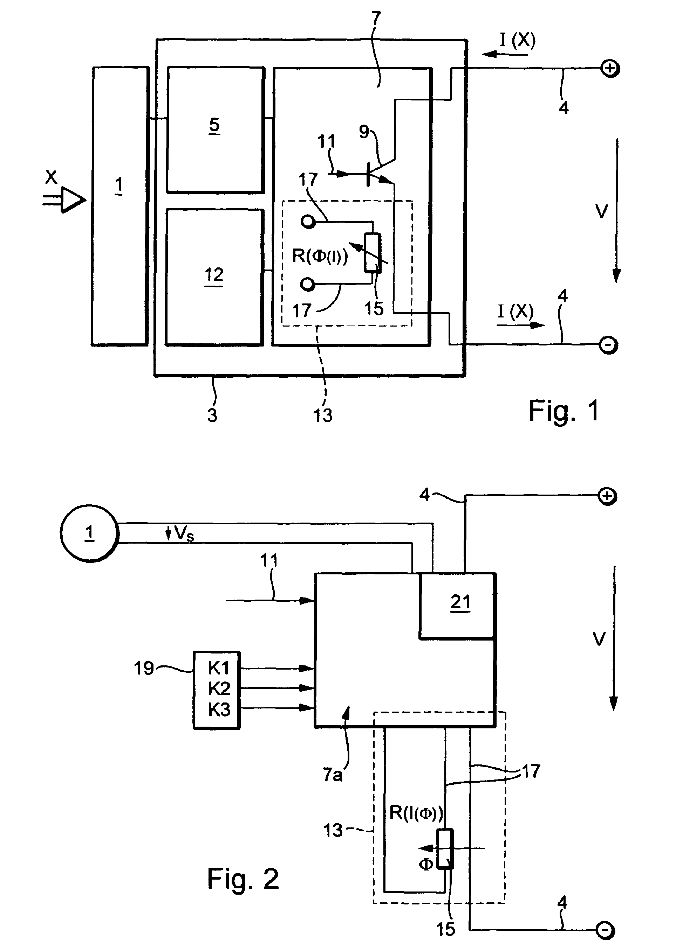

Fig. 1 zeigt ein Blockschaltbild eines erfindungsgemäßen Transmitters. Der Transmitter weist einen Meßaufnehmer 1 auf, der dazu dient eine physikalische Meßgröße X zu erfassen und in eine elektrische Größe umzuwandeln. Dies kann z.B. ein Druck-, Temperatur-, Durchfluß- oder ein Füllstandssensor sein. Die physikalische Meßgröße X wirkt auf den Meßaufnehmer 1 ein und dieser gibt eine einem aktuellen Meßwert der physikalischen Größe X entsprechende elektrische Größe in Form eines elektrischen Signales an eine an den Meßaufnehmer 1 angeschlossene Elektronik 3 weiter.

Die Elektronik 3 wandelt die elektrische Größe in ein Meßsignal um und stellt dieses über einen Stromausgang in Form eines der Meßgröße entsprechenden Signalstromes I zur Verfügung. Hierzu weist der Stromausgang zwei Leitungen 4 auf. Über eine erste Leitung 4 fließt der Signalstrom I zum Transmitter und über eine zweite Leitung 4 fließt er vom Transmitter wieder ab. An den Leitungen 4 liegt im Betrieb eine fest vorgegebene Spannung V, z.B. in Höhe von 12 V, an.

Die Elektronik 3 umfaßt eine Signalverarbeitungsschaltung 5, die das elektrische Signal aufbereitet. Hierzu kann z.B. eine Verstärkung des Signals, eine Vornahme von evtl. erforderlichen Fehlerkorrekturen und/oder eine Einstellung des Signals bezüglich Kalibrations- und/oder Kompensationsdaten gehören.

Ein Ausgangssignal der Signalverarbeitungsschaltung 5 ist einer Regelschaltung 7 zugeführt, die zur Einstellung des Signalstromes l in Abhängigkeit vom Meßsignal vorgesehen ist.

Eine solche Regelschaltung 7 weist z.B. einen in den durch die Leitungen 4 gebildeten Stromkreis als Längsregler eingefügten Transistor 9 auf. Eine Basis des Transistor 9 wird mit einem von der Elektronik, z.B. von der Signalverarbeitungsschaltung 5, erzeugten meßwert-abhängigen Steuersignal 11 angesteuert.

Zusätzlich kann eine Kommunikationseinheit 12 vorgesehen sein, die z.B. dazu dient eine unidirektionale oder eine bidirektionale Kommunikation zwischen dem Transmitter und einer übergeordneten Einheit zu ermöglichen. Die Kommunikation kann z.B. erfolgen, indem dem Signalstrom I ein Kommunikationssignal, z.B. in Sinus- oder Rechteckform, überlagert ist.

Um den Signalstrom I möglichst genau regeln zu können ist eine Aufnahmeeinheit 13 vorgesehen, die den momentanten Signalstrom I erfaßt und der Regelschaltung 7 zur Verfügung stellt. Die Aufnahmeeinheit 13 umfaßt ein magnetoresistives Element 15, dessen Widerstandswert sich in Abhängigkeit von dem durch den Signalstrom I erzeugten magnetischen Fluß Φ ändert. Das magnetoresistive Element 15 befindet sich in unmittelbarer Nähe einer der Leitungen 4 und verläuft vorzugsweise parallel dazu.

Der mittels der Aufnahmeeinheit 13 erfaßte momentane Signalstrom I ist der Regelschaltung 7 zur Regelung des meßgrößen-abhängigen Signalstromes I zugeführt.

Ein aktueller Widerstandswert des magnetoresistiven Elements 15 wird über daran angeschlossene Anschlußleitungen 17, z.B. mittels einer in Fig. 1 nicht dargestellten Widerstandsmeßschaltung, abgefragt und steht der Regelschaltung 7 unmittelbar zur Verfügung. Er kann z.B. dazu eingesetzt werden, eine Abweichung des momentanen Signalstromes I von einem gewünschten Stromwert zu ermitteln und in ein entprechendes Zusatzsignal umzuwandeln, daß dem Steuersignal 11 überlagert wird.

Alternativ kann ein Meßergebnis der Widerstandsmeßschaltung auch der Signalverarbeitungsschaltung 5 zugeführt werden, die dann ein entsprechend verändertes Steuersignal 11 abgibt.

Vorzugsweise ist die Aufnahmeeinheit 13 galvanisch vom Stromausgang getrennt.

Fig. 2 zeigt ein weiteres Ausführungsbeispiel einer Regelschaltung 7a, wie sie in dem in Fig. 1 dargestellten Transmitter ebenfalls einsetzbar ist.

Im Unterschied zu der in Fig. 1 dargestellten Regelschaltung 7 weist die in Fig. 2 dargestellte Regelschaltung 7a ein Regelverhalten auf, das durch eine oder mehrere Stellgrößen K1, K2, K3 einstellbar ist. Vorzugsweise sind die Stellgrößen K1, K2, K3 in einem Speicher 19 abgelegt und digital einstellbar. Die Hauptregelung wird auch hier durch das Steuersignal 11 vorgenommen. Die Stellgrößen K1, K2, K3 dienen lediglich dazu, z.B. meßaufnehmer-spezifische Kenngrößen, wie z.B. eine Nullpunktverschiebung, zu kompensieren oder eine Temperaturabhängigkeit des Transmitters auszugleichen.
Das Steuersignal 11 und die Stellgrößen K1, K2, K3 werden in der Regelschaltung 7a zusammen mit dem von der Aufnahmeeinheit 13 ermittelten momentanen Signalstrom I zur endgültigen Einstellung des Signalstromes I herangezogen.

Die Regelschaltung 7a ist vorzugsweise als ein integrierter Schaltkreis ausgebildet. Genauso können auch die Regelschaltung 7a und die Aufnahmeeinheit 13 als ein integrierter Schaltkreis ausgebildet sein.

Ein weiterer Bestandteil einer solchen integrierten Schaltung ist vorzugsweise auch ein Schaltungsteil 21, der aus dem Signalstrom I eine Versorgungsspannung V_{S} für den Transmitter oder Teile davon generiert. Ein Teil des Transmitters kann z.B. der Meßaufnehmer 1 sein, der durch den Schaltungsteil 21 mit der Versorgungsspannung V_{S} versorgt wird.

Durch die erfindungsgemäße Verwendung eines magnetoresistiven Elements 15 zur Erfassung des Signalstromes, kann bei den erfindungsgemäßen Transmittern auf einen Widerstand im Signalstromkreis verzichtet werden. Die mit diesen ohmschen Widerständen verbundenen Nachteile treten damit hier nicht auf.

Da das magnetoresistive Element 15 in einem vom durch die Leitungen 4 gebildeten Stromausgang unabhängigen Stromkreis liegt, kann hier die widerstandsmessung mittels eines minimalen Meßstromes vorgenommen werden. Die dadurch bedingte Wärme und der Energieverlust sind somit auch bei einer verhältnismäßig hohen Meßgenauigkeit sehr gering.

## Patentansprüche

1. Transmitter mit
- einem Meßaufnehmer (1),
- der dazu dient eine physikalische Meßgröße (X) zu erfassen und in eine elektrische Größe umzuwandeln,
- eine Elektronik (3),
- die die elektrische Größe in ein Meßsignal umwandelt und
- über einen Stromausgang in Form eines der Meßgröße entsprechenden Signalstromes (I) zur Verfügung stellt, und
- einer Aufnahmeeinheit (13),
- mit einem magnetoresistiven Element (15),
- dessen Widerstandswert sich in Abhängigkeit von dem durch den Signalstrom (I) erzeugten magnetischen Fluß (Φ) ändert,
bei dem eine Regelschaltung (7, 7a) zur Einstellung des Signalstromes (I) in Abhängigkeit vom Meßsignal vorgesehen ist, und
bei dem der Regelschaltung (7, 7a) zur Regelung des meßgrößen-abhängigen Signalstromes (I) der mittels der Aufnahmeeinheit (13) erfaßte momentane Signalstrom zugeführt ist.

2. Transmitter nach Anspruch 1, bei dem die Regelschaltung (7) einen Transistor (9) aufweist, der im Betrieb durch ein von der Elektronik (3) generiertes meßwert-abhängiges Steuersignal (11) angesteuert ist.

3. Transmitter nach Anspruch 1, bei dem die Aufnahmeeinheit (13) galvanisch vom Stromausgang getrennt ist.

4. Transmitter nach Anspruch 1, bei dem ein Regelverhalten der Regelschaltung (7a) durch eine oder mehrer Stellgrößen (K1, K2, K3) einstellbar ist.

5. Transmitter nach Anspruch 4, bei dem die Stellgrößen (k1, K2, K3) in einem Speicher (19) abgelegt sind und digital einstellbar sind.

6. Transmitter nach Anspruch 4 oder 5, dem die Regelschaltung (7a) als ein integrierter Schaltkreis ausgebildet ist, oder bei dem die Regelschaltung (7a) und die Aufnahmeeinheit (13) als ein integrierter Schaltkreis ausgebildet sind.

7. Transmitter nach Anspruch 6, bei dem der integrierte Schaltkreis auch einen Schaltungsteil (21) enthält, der aus dem Signalstrom (I) eine Versorgungsspannung (V) für den Transmitter oder Teile davon generiert.

## Claims

1. Transmitter with
- a sensor (1)
-- which is used to measure a physical variable (X) and convert it to an electrical variable
- electronics (3)
-- which convert the electrical variable to a measuring signal and
-- make it available via a current output in the form of a signal current (I) that corresponds to the measured variable, and
- a recording unit (13),
-- with a magnetoresistive element (15)
-- whose resistance value changes depending on the magnetic flux (Φ) produced by the signal current (I),
- where a control circuit (7, 7a) is provided to regulate the signal current (I) depending on the measuring signal, and
- where the momentary signal current, measured by the recording unit (13), is fed to the control circuit (7, 7a) to regulate the signal current (I) that depends on the measured variable.

2. Transmitter as per Claim 1, where the control circuit (7) has a transistor (9) which is controlled during operation by a control signal (11), which is generated by the electronics (3) and depends on the measured value.

3. Transmitter as per Claim 1, where the recording unit (13) is galvanically isolated from the current output.

4. Transmitter as per Claim 1, where a control behavior of the control circuit (7a) can be adjusted by one or more manipulated variables (K1, K2, K3).

5. Transmitter as per Claim 4, where the manipulated variables (K1, K2, K3) are stored in a memory (19) and can be adjusted by digital means.

6. Transmitter as per Claim 4 or 5, where the control circuit (7a) is designed as an integrated circuit, or where the control circuit (7a) and the recording unit (13) are designed as an integrated circuit.

7. Transmitter as per Claim 6, where the integrated circuit also contains a circuit part (21) which uses the signal current (I) to generate a supply voltage (V) for the transmitter or parts thereof.

## Revendications

1. Transmetteur avec
- un capteur (1),
-- qui sert à mesurer une grandeur de mesure (X) physique et à la convertir en une grandeur électrique,
- une unité électronique (3),
-- qui convertit la grandeur électrique en un signal de mesure et
-- le met à disposition par l'intermédiaire d'une sortie courant, sous la forme d'un courant de signal (I) correspondant à la grandeur de mesure, et
- une unité d'enregistrement (13),
-- avec un élément magnétorésistif (15),
-- dont la valeur de résistance varie en fonction du flux magnétique (Φ) généré par le courant de signal (I),
- pour lequel est prévu un circuit de régulation (7, 7a) pour le réglage du courant de signal (I) en fonction du signal de mesure, et
- pour lequel le courant de signal momentané, mesuré au moyen de l'unité d'enregistrement (13), est acheminé au circuit de régulation (7, 7a) destiné à la régulation du courant de signal (I) fonction de la grandeur de mesure.

2. Transmetteur selon la revendication 1, pour lequel le circuit de régulation (7) comporte un transistor (9), qui est commandé en fonctionnement par un signal de commande (11), fonction de la valeur mesurée, généré par l'unité électronique.

3. Transmetteur selon la revendication 1, pour lequel l'unité d'enregistrement (13) est séparée galvaniquement par rapport à la sortie courant.

4. Transmetteur selon la revendication 1, pour lequel un comportement de régulation du circuit de régulation (7a) est réglable par une ou plusieurs grandeurs de réglage (K1, K2, K3).

5. Transmetteur selon la revendication 4, pour lequel les grandeurs de réglage (K1, K2, K3) sont enregistrées dans une mémoire (19) et réglables par voie numérique.

6. Transmetteur selon la revendication 4 ou 5, pour lequel le circuit de régulation (7a) est configuré en tant que circuit intégré, ou pour lequel le circuit de régulation (7a) et l'unité d'enregistrement (13) sont configurés en tant que circuit intégré.

7. Transmetteur selon la revendication 6, pour lequel le circuit intégré contient également une partie de circuit (21), qui génère à partir du courant de signal (I) une tension d'alimentation (V) pour le transmetteur ou des composants de ce dernier.
